# FASCICULE DE BREVET EUROPEEN

(11) **EP 1 358 228 B1**
(45) Date de publication et mention de la délivrance du brevet: **24.10.2007**
(21) Numéro de dépôt: 01990596.7
(22) Date de dépôt: 20.12.2001
(51) Int. Cl.: C08F 14/00, C08F 259/00, C08F 259/04, C08F 291/00

(54) **PROCEDE DE PREPARATION DE LATEX**
VERFAHREN ZUR HERSTELLUNG EINER LATEX
METHOD FOR PREPARING LATEX

(30) Priorité: 21.12.2000 FR 0017073
(43) Date de publication de la demande: 05.11.2003
(73) Titulaire: SOLVAY (SOCIETE ANONYME), 1050 Bruxelles (BE)
(72) Inventeur: MASSILLON, Henri, B-4300 Waremme (BE)
(74) Mandataire: Jacques, Philippe
(86) Numéro de dépôt international: PCT/EP2001/015381
(87) Numéro de publication internationale: WO 2002/050140

(56) Documents cités:
- EP-A- 0 810 241
- US-A- 3 725 367
- US-A- 4 245 070

## Description

La présente invention concerne un procédé de préparation de latex par polymérisation radicalaire en batch d'un ou plusieurs monomères.

Plusieurs procédés de préparation de latex par polymérisation radicalaire en batch sont connus de l'homme du métier.

Tout d'abord, il est connu de préparer des latex par polymérisation radicalaire en batch en émulsion non micellaire, à l'intervention d'un initiateur hydrosoluble, éventuellement à l'intervention d'un latex semence. Ce procédé de préparation de latex est tel que les compositions et les articles préparés au départ des latex ou des résines obtenues en séchant ceux-ci puis en broyant les produits secs ont de mauvaises propriétés, notamment une faible stabilité thermique et une coloration initiale prononcée. En outre, si les polymérisations en émulsion sont réalisées sans latex semence :
- des particules élémentaires sont créées au cours de la polymérisation selon des mécanismes très complexes, difficiles à maîtriser
- les particules élémentaires du (des) polymère(s) ainsi préparé(s) sont toutes de petite taille ; les latex comprenant de telles particules élémentaires de polymère(s) ainsi que les compositions plastisols comprenant les résines de polymère(s) préparées en séchant de tels latex puis en broyant les produits secs ont une viscosité très élevée.
En outre, si les polymérisations en émulsion non micellaire sont réalisées à l'intervention d'un latex semence :
- des particules élémentaires sont néanmoins le plus souvent créées au cours de la polymérisation, avec les inconvénients susmentionnés
- ipso facto, il est nécessaire de préparer ledit latex semence ; or, la préparation de latex semences appropriés est en soi complexe.

Ensuite, il est connu de préparer des latex par polymérisation radicalaire en batch en microsuspension, à l'intervention d'initiateur(s) oléosoluble(s) compris dans une dispersion fine de monomère. Ce procédé de préparation de latex est tel que les compositions et les articles préparés au départ des latex ou au départ des résines obtenues en séchant ceux-ci puis en broyant les produits secs ont globalement de meilleures propriétés que les compositions et les articles préparés au départ des latex et des résines obtenus par les procédés de préparation de latex selon lesquels les latex sont préparés par polymérisation radicalaire en batch en émulsion, tels que décrits ci-avant. Toutefois, ce procédé de préparation de latex présente un inconvénient majeur : ce procédé est tel que les latex préparés selon lui ont une mauvaise stabilité mécanique ; afin d'améliorer la stabilité mécanique de tels latex, il est nécessaire de réduire la quantité de(s) monomère(s) mise(s) en oeuvre à la polymérisation, d'où une faible productivité.

Enfin, le brevet U.S. 4,245,070 décrit un procédé de préparation de latex d'un polymère du chlorure de vinyle par polymérisation radicalaire en batch en « microsuspension spéciale », à l'intervention d'un latex semence comprenant un initiateur oléosoluble (désigné ci-après LB*), d'un ou de plusieurs latex semences ne contenant pas d'initiateur et aussi de préférence à l'intervention d'un agent activateur complexé. Selon ce procédé de préparation de latex, aucune dispersion fine de monomère n'est introduite dans le milieu de polymérisation. Ce procédé de préparation de latex présente de nombreux inconvénients :
- ce procédé met en oeuvre à la polymérisation un latex semence LB*, dont la préparation, le stockage et la manipulation sont extrêmement difficiles : (a) quant à la préparation de LB* : l'élimination du monomère résiduaire de LB* doit être réalisée dans des conditions douées, de manière à ne pas détruire les initiateurs non décomposés ; (b) quant au stockage et à la manipulation de LB* : des précautions tout particulières sont nécessaires, notamment le maintien d'une température de stockage suffisamment basse et l'absence de contact avec l'atmosphère
- ce procédé, lorsqu'il met en oeuvre à la polymérisation un agent activateur complexé, est habituellement tel que les compositions et les articles préparés au départ des latex ou au départ des résines obtenues en séchant ceux-ci, ont de mauvaises propriétés, notamment une faible stabilité thermique et une coloration initiale prononcée
- ce procédé, lorsqu'il ne met pas en oeuvre à la polymérisation un agent activateur complexé plus le latex LB* en quantité élevée, est tel que la durée de la polymérisation est extrêmement longue (18 heures, selon l'exemple 1 du brevet).

La présente invention a pour objet un procédé de préparation de latex par polymérisation radicalaire en batch d'un ou plusieurs monomères, qui permet à la fois de bénéficier de tous les avantages des procédés de l'art antérieur et d'en éviter tous les inconvénients.

A cet effet, l'invention concerne un procédé de préparation de latex par polymérisation radicalaire en batch d'un ou plusieurs monomères, caractérisé en ce qu'il fait intervenir à la polymérisation :
(a) une ou plusieurs dispersions fines comprenant un ou plusieurs monomères finement dispersés
   et
(b) un ou plusieurs latex semences comprenant un ou plusieurs polymères d'ensemencement.

Le procédé de préparation de latex selon l'invention fait éventuellement en outre intervenir à la polymérisation notamment une ou plusieurs substances telles quelles et/ou une ou plusieurs solutions d'une ou plusieurs substances et/ou une ou plusieurs dispersions d'une ou plusieurs substances, lesquelles substances peuvent être choisies, indépendamment entre elles et les unes des autres, notamment parmi : les monomères, les liquides de dispersion, les initiateurs oléosolubles, les initiateurs hydrosolubles, les agents émulsionnants ioniques, les agents émulsionnants non ioniques, les agents stabilisants mécaniques, les agents réducteurs, les agents complexants, les agents catalyseurs, les agents suppresseurs de pics, les agents fixateurs de pH, les agents allongeurs de chaîne et les agents de transfert.

En particulier, le procédé de préparation de latex selon l'invention fait. éventuellement en outre intervenir une ou plusieurs substances telles quelles et/ou une ou plusieurs solutions choisies parmi:
- les monomères tels quels
- les liquides de dispersion tels quels
- les solutions comprenant un ou plusieurs initiateurs hydrosolubles
- les solutions comprenant un ou plusieurs agents émulsionnants ioniques
- les solutions comprenant un ou plusieurs agents réducteurs.

La ou les dispersions fines; le ou les latex semences, la ou les substances telles quelles, la ou les solutions et la ou les dispersions peuvent être introduites dans le réacteur (ou; éventuellement, dans le cas des dispersions fines et des latex semences, préparés directement dans celui-ci), indépendamment entre eux et les uns des autres, avant que la polymérisation ne commence ou pendant que la polymérisation se déroule, éventuellement en des moments et selon des programmes d'introduction distincts.

Le nombre de dispersions fines vaut habituellement au plus le nombre de monomères finement dispersés et de préférence 1.

La ou les dispersions fines comprennent habituellement au moins:
- un ou plusieurs monomères finement dispersés
- un ou plusieurs liquides de dispersion de ces monomères.

Une ou plusieurs dispersions fines comprennent éventuellement en outre et indépendamment les unes des autres : un ou plusieurs initiateurs oléosolubles, un ou plusieurs initiateurs hydrosolubles, un ou plusieurs agents émulsionnants ioniques, un ou plusieurs agents émulsionnants non ioniques, un ou plusieurs agents stabilisants mécaniques, un ou plusieurs agents réducteurs, un ou plusieurs agents complexants, un ou plusieurs agents catalyseurs, un ou plusieurs agents suppresseurs de pics, un ou plusieurs agents fixateurs de pH, un ou plusieurs agents allongeurs de chaîne, un ou plusieurs agents de transfert, un ou plusieurs polymères.

Au moins une et de préférence toutes les dispersions fines comprennent un ou plusieurs initiateurs oléosolubles.

Habituellement, aucune dispersion fine ne comprend d'initiateur hydrosoluble.

Habituellement au moins une et de préférence toutes les dispersions fines comprennent un ou plusieurs agents émulsionnants ioniques.

Habituellement, aucune dispersion fine ne comprend de polymère.

La ou les dispersions fines peuvent être préparées par tout moyen connu. La ou les dispersions fines sont préparées habituellement au moyen d'un équipement d'affinement, tel que, par exemple, un homogénéiseur à haute pression, un moulin colloïdal, une pompe rapide, un agitateur à vibrations, un appareil à ultrasons. La ou les dispersions fines sont préparées de préférence au moyen d'un homogénéiseur à haute pression ou d'un moulin colloïdal et de manière particulièrement préférée au moyen d'un homogénéiseur à haute pression.

La ou les dispersions fines sont habituellement, indépendamment les unes des autres et indépendamment des latex semences, soit préparées en dehors du réacteur de polymérisation puis introduites dans celui-ci, soit directement préparées à l'intérieur de celui-ci. Il est également possible, notamment de préparer une ou plusieurs dispersions fines en dehors du réacteur puis d'introduire celles-ci dans un ou plusieurs latex semences ou dans une ou plusieurs substances telles quelles, lesquels sont introduits à leur tour dans le réacteur de polymérisation. La ou les dispersions fines sont préparées de préférence en dehors du réacteur de polymérisation puis sont introduites dans celui-ci.

La ou les dispersions fines introduites dans le réacteur ou directement préparées dans celui-ci le sont habituellement, indépendamment les unes des autres et indépendamment des latex semences, avant que la polymérisation ne commence ou pendant que la polymérisation se déroule, éventuellement en des moments et selon des programmes d'introduction distincts. La ou les dispersions fines introduites dans le réacteur ou directement préparées dans celui-ci, le sont de préférence avant que la polymérisation ne commence.

Le nombre de latex semences vaut habituellement au plus le nombre de polymères d'ensemencement et de préférence 1.

Le ou les latex semences comprennent habituellement au moins:
- un ou plusieurs polymères d'ensemencement
- un ou plusieurs liquides de dispersion de ces polymères.

Un ou plusieurs latex semences comprennent éventuellement en outre et indépendamment les uns des autres : un ou plusieurs initiateurs oléosolubles, un ou plusieurs initiateurs hydrosolubles, un ou plusieurs agents émulsionnants ioniques, un ou plusieurs agents émulsionnants non ioniques, un ou plusieurs agents stabilisants mécaniques, un ou plusieurs agents réducteurs, un ou plusieurs agents complexants, un ou plusieurs agents catalyseurs, un ou plusieurs agents suppresseurs de pics, un ou plusieurs agents fixateurs de pH, un ou plusieurs agents allongeurs de chaîne, un ou plusieurs agents de transfert, un ou plusieurs monomères.

Habituellement, au plus un latex semence comprend un ou plusieurs initiateurs oléosolubles ; de préférence, aucun latex semence ne comprend d'initiateur oléosoluble.

Habituellement, aucun latex semence ne comprend d'initiateur hydrosoluble ajouté après la préparation du latex semence. 1

Habituellement au moins un et de préférence tous les latex semences comprennent un ou plusieurs agents émulsionnants ioniques.

Habituellement, aucun latex semence ne comprend de monomère.

Le ou les latex semences peuvent être préparés par tout procédé de préparation de latex connu, notamment par les procédés de polymérisation en émulsion aqueuse, micellaires ou non micellaires, ensemencés ou non et par les procédés de polymérisation en microsuspension aqueuse, ensemencés ou non ; le ou les latex semences peuvent aussi être préparés par le procédé de préparation de latex selon l'invention. Le ou les latex semences sont habituellement préparés par un procédé de polymérisation en émulsion aqueuse non ensemencé ; de préférence par un procédé de polymérisation en émulsion aqueuse non ensemencé selon lequel au moins un émulsionnant ionique est introduit dans le milieu de polymérisation avant que la polymérisation ne commence ; de manière particulièrement préférée par un procédé de polymérisation en émulsion aqueuse non ensemencé selon lequel au moins un émulsionnant ionique est introduit dans le milieu de polymérisation avant que la polymérisation ne commence, à une concentration rapportée à l'eau valant au moins ½ fois la concentration micellaire critique de cet émulsionnant ionique dans l'eau.

Le ou les latex semences sont habituellement, indépendamment les uns des autres et indépendamment des dispersions fines, soit préparés en dehors du réacteur de polymérisation puis introduits dans celui-ci, soit directement préparés à l'intérieur de celui-ci. Il est également possible, notamment de préparer un ou plusieurs latex semences en dehors du réacteur puis d'introduire ceux-ci soit dans une ou plusieurs dispersions fines ou dans une ou plusieurs substances telles quelles, lesquelles sont introduites à leur tour dans le réacteur de polymérisation, soit encore dans un ou plusieurs mélanges préparatoires à une ou plusieurs dispersions fines non encore constituées, lesquels sont alors soumis aux opérations habituelles d'affinement (par exemple, au moyen d'un homogénéiseur) puis introduits dans le réacteur. Le ou les latex semences sont préparés de préférence en dehors du réacteur de polymérisation puis introduits dans celui-ci.

Le ou les latex semences introduits dans le réacteur de polymérisation ou directement préparés dans celui-ci, lé sont habituellement, indépendamment les uns des autres et indépendamment des dispersions fines, avant que la polymérisation ne commence ou pendant que la polymérisation se déroule, éventuellement en des moments et selon des programmes d'introduction distincts. Le ou les latex semences introduits dans le réacteur de polymérisation ou directement préparés dans celui-ci, le sont de préférence avant que la polymérisation ne commence.

Le nombre de monomères intervenant tels quels à la polymérisation peut être quelconque ; en particulier, ce nombre peut valoir 0. Le nombre de monomères intervenant tels quels à la polymérisation vaut de préférence au moins le nombre de monomères finement dispersés et vaut de manière particulièrement préférée le nombre de monomères finement dispersés.

Le nombre de liquides de dispersion intervenant tels quels à la polymérisation peut être quelconque ; en particulier, ce nombre peut valoir 0. Le nombre de liquides de dispersion intervenant tels quels à la polymérisation vaut de préférence au moins le nombre de liquides de dispersion des monomères finement dispersés et vaut de manière particulièrement préférée le nombre de liquides de dispersion des monomères finement dispersés.

Le nombre de solutions comprenant un ou plusieurs initiateurs hydrosolubles vaut habituellement au plus 1 ; de préférence, ce nombre vaut 0.

La ou les solutions comprenant un ou plusieurs initiateurs hydrosolubles comprennent habituellement :
- un ou plusieurs initiateurs hydrosolubles
- un ou plusieurs solvants de ces initiateurs.

Le nombre de solutions comprenant un ou plusieurs agents émulsionnants ioniques vaut habituellement au moins le nombre d'agents émulsionnants ioniques compris dans les dispersions fines et vaut de préférence le nombre d'agents émulsionnants ioniques compris dans les dispersions fines.

La ou les solutions comprenant un ou plusieurs agents émulsionnants ioniques comprennent habituellement:
- un ou plusieurs agents émulsionnants ioniques
- un ou plusieurs solvants de ces agents émulsionnants ioniques.

Le nombre de solutions comprenant un ou plusieurs agents réducteurs vaut habituellement au plus 1 ; de préférence, ce nombre vaut 0.

La ou les solutions comprenant un ou plusieurs agents réducteurs comprennent habituellement:
- un ou plusieurs agents réducteurs hydrosolubles
- un ou plusieurs solvants de ces agents réducteurs.

Le ou les monomères sont habituellement choisis parmi les monomères éthyléniquement insaturés.

De préférence au moins 50% en poids, de manière particulièrement préférée au moins 80% en poids et de manière tout particulièrement préférée la totalité des monomères sont choisis parmi les monomères vinyliques halogénés.

En outre, si un ou plusieurs monomères sont choisis parmi les monomères vinyliques halogénés, le ou les monomères autres que le ou les monomères vinyliques halogénés sont de préférence choisis parmi les esters vinyliques, notamment l'acétate de vinyle, ainsi que parmi les esters acryliques et les esters méthacryliques.

Le ou les monomères vinyliques halogénés sont choisis habituellement parmi les monomères vinyliques halogénés contenant du chlore et, de préférence, le monomère vinylique halogéné est le chlorure de vinyle.

Le ou les monomères sont habituellement :
- le ou les monomères finement dispersés
- le ou les monomères intervenant tels quels à la polymérisation, désignés « monomères tels quels ».

Le ou les monomères finement dispersés ont une distribution de leurs gouttelettes habituellement très étalée ; l'étendue de la distribution des gouttelettes vaut de préférence de quelques centièmes de micron à quelques microns et de manière particulièrement préférée de quelques dizièmes de micron à quelques microns.

En outre de préférence, le ou les monomères finement dispersés ont une distribution de leurs gouttelettes unimodale.

Le poids du ou des monomères finement dispersés rapporté au poids total du ou des monomères vaut habituellement au moins 1%, de préférence au moins 5%, de manière particulièrement préférée au moins 10% et de manière tout particulièrement préférée au moins 15%.

Le poids du ou des monomères finement dispersés rapporté au poids total du ou des monomères vaut habituellement au plus 100%; il vaut de préférence au plus 75% et de manière particulièrement préférée au plus 50%.

Le poids du ou des monomères tels quels vaut habituellement le poids total du ou des monomères moins le poids du ou des monomères finement dispersés.

Le poids du ou des monomères tels quels introduits dans le réacteur de polymérisation pendant que celle-ci se déroule rapporté au poids total du ou des monomères vaut habituellement au moins 15%.

Le ou les polymères d'ensemencement sont habituellement des polymères préparés par polymérisation radicalaire d'un ou de plusieurs monomères éthyléniquement insaturés.

Habituellement au moins 50% en poids, de préférence au moins 80% en poids et de manière particulièrement préférée la totalité des polymères d'ensemencement sont choisis parmi les polymères vinyliques halogénés.

Le ou les polymères vinyliques halogénés sont choisis habituellement parmi les polymères vinyliques halogénés contenant du chlore, de préférence parmi les polymères du chlorure de vinyle comprenant au moins 80% en poids d'unités - CH₂- CHC1- et de manière particulièrement préférée parmi les homopolymères du chlorure de vinyle.

Le ou les polymères d'ensemencement peuvent avoir une distribution de leurs particules élémentaires quelconque.

Le ou les polymères d'ensemencement ont une distribution de leurs particules élémentaires telle qu'au moins 50% en poids de celles-ci ont un diamètre habituellement inférieur à 400 nm, de préférence inférieur à 300 nm, de manière particulièrement préférée inférieur à 200 nm et de manière tout particulièrement préférée inférieur à 130 nm.

En outre, le ou les polymères d'ensemencement ont une distribution de leurs particules élémentaires telle qu'au moins 50% en poids de celles-ci ont un diamètre habituellement supérieur à 25 nm, de préférence supérieur à 40 nm, de manière particulièrement préférée supérieur à 55 nm et de manière tout particulièrement préférée supérieur à 70 nm.

En outre, le ou les polymères d'ensemencement ont une distribution de leurs particules élémentaires dont le nombre de familles vaut habituellement au plus le nombre de latex semences plus 1, de préférence vaut au plus le nombre de latex semences et de manière particulièrement préférée vaut 1.

En outre, le ou les polymères d'ensemencement ont une distribution de leurs particules élémentaires dont habituellement au moins une et de préférence chaque famille a un diamètre moyen en poids valant habituellement au plus 300 nm, de préférence au plus 200 nm et de manière particulièrement préférée au plus 130 nm.

En outre, le ou les polymères d'ensemencement ont une distribution de leurs particules élémentaires dont habituellement au moins une et de préférence chaque famille a un diamètre moyen en poids valant habituellement au moins 40 nm, de préférence au moins 55 nm et de manière particulièrement préférée au moins 70 nm.

Le poids du ou des polymères d'ensemencement rapporté au poids total du ou des monomères vaut habituellement au moins 1%, de préférence au moins 2% et de manière particulièrement préférée au moins 3%.

Le poids du ou des polymères d'ensemencement rapporté au poids total du ou des monomères vaut habituellement au plus 25%, de préférence au plus 15% et de manière particulièrement préférée au plus 10%.

Le ou les liquides de dispersion et le ou les solvants sont habituellement choisis parmi l'eau et les alcools ayant un poids moléculaire inférieur à 80.

De préférence au moins 50% en poids, de manière particulièrement préférée au moins 80% en poids et de manière tout particulièrement préférée la totalité des liquides de dispersion et des solvants sont de l'eau.

Le ou les liquides de dispersion sont habituellement :
- le ou liquides de dispersion du ou des monomères finement dispersés
- le ou les liquides de dispersion du ou des polymères d'ensemencement
- le ou les liquides de dispersion intervenant tels quels à la polymérisation, désignés « liquides de dispersion tels quels».

Le poids du ou des liquides de dispersion du ou des monomères finement dispersés rapporté au poids du ou des monomères finement dispersés vaut habituellement au moins 1 et de préférence au moins 1,2.

Le poids du ou des liquides de dispersion du ou des monomères finement dispersés rapporté au poids du ou des monomères finement dispersés vaut habituellement au plus 2 et de préférence au plus 1,5.

Le poids du ou des liquides de dispersion du ou des polymères d'ensemencement rapporté au poids du ou des polymères d'ensemencement vaut habituellement au moins 1.

Le poids du ou des liquides de dispersion du ou des polymères d'ensemencement rapporté au poids du ou des polymères d'ensemencement vaut habituellement au plus 2.

Le poids du ou des liquides de dispersion tels quels rapporté au poids du ou des monomères tels quels vaut habituellement au moins 0,2 et de préférence au moins 0,4.

Le poids du ou des liquides de dispersion tels quels rapporté au poids du ou des monomères tels quels vaut habituellement au plus 2 et de préférence au plus 1,5.

Le ou les initiateurs oléosolubles sont habituellement des peroxydes organiques oléosolubles ou des diazocomposés oléosolubles.

Le ou les initiateurs oléosolubles sont choisis de préférence parmi les peroxydes organiques oléosolubles comprenant au moins 10 atomes de carbone et parmi les diazocomposés oléosolubles comprenant au moins 10 atomes de carbone, de manière particulièrement préférée parmi les peroxydes organiques oléosolubles comprenant au moins 20 atomes de carbone, et de manière tout particulièrement préférée parmi les peroxydes de diacyle oléosolubles comprenant au moins 20 atomes de carbone et parmi les peroxydicarbonates de dialkyle oléosolubles comprenant au moins 20 atomes de carbone.

Le ou les initiateurs oléosolubles sont habituellement :
- le ou les initiateurs oléosolubles compris dans la ou les dispersions fines
- le ou les initiateurs oléosolubles compris dans le ou les latex semences.

Le nombre de moles du ou des initiateurs oléosolubles compris dans la ou les dispersions fines rapporté au nombre de moles total du ou des initiateurs oléosolubles vaut habituellement au moins 50% et de préférence au moins 75%. Inversement, le nombre de moles du ou des initiateurs oléosolubles compris dans le ou les latex semences rapporté au nombre de moles total du ou des initiateurs oléosolubles vaut habituellement moins de 50% et de préférence moins de 25%.

Le ou les initiateurs hydrosolubles sont habituellement choisis parmi les peroxydes inorganiques hydrosolubles, les hydroperoxydes organiques hydrosolubles et les diazocomposés hydrosolubles. Le ou les initiateurs hydrosolubles sont choisis de préférence parmi les persulfates hydrosolubles et l'eau oxygénée.

Le ou les initiateurs hydrosolubles sont habituellement compris dans une ou plusieurs solutions d'initiateur(s) hydrosoluble(s).

Le nombre de moles total du ou des initiateurs hydrosolubles rapporté au nombre de moles total du ou des initiateurs oléosolubles vaut habituellement moins de 100% et de préférence moins de 50%.

Le ou les agents émulsionnants ioniques sont tous choisis habituellement soit parmi les agents émulsionnants anioniques et les agents émulsionnants amphotères soit parmi les agents émulsionnants cationiques et les agents émulsionnants amphotères; de préférence, tous sont choisis parmi les agents émulsionnants anioniques ; de manière particulièrement préférée, tous sont choisis parmi les agents émulsionnants anioniques suivants : sulfates d'alkyle, sulfonates d'alkyle, sulfonates d'alkylaryle, sulfosuccinates de dialkyle, carboxylates d'alkyle, lesquels sels peuvent être, indépendamment les uns des autres, éventuellement éthoxylés et peuvent comprendre, indépendamment les uns des autres, comme contre-ion un cation sodium, potassium, lithium ou ammonium ; de manière tout particulièrement préférée, tous sont choisis parmi les sels non éthoxylés sodiques suivants : sulfates d'alkyle, sulfonates d'alkyle, sulfonates d'alkylaryle, sulfosuccinates de dialkyle, carboxylates d'alkyle.

Le ou les émulsionnants ioniques sont habituellement:
- le ou les émulsionnants ioniques compris dans la ou les dispersions fines
- le ou les émulsionnants ioniques compris dans le ou les latex semences
- le ou les émulsionnants ioniques compris dans la ou les solutions d'agent(s) émulsionnant(s) ionique(s).

Le poids du ou des agents émulsionnants ioniques compris dans la ou les dispersions fines rapporté au poids du ou des monomères finement dispersés vaut habituellement au moins 0,5%.

Le poids du ou des agents émulsionnants ioniques compris dans la ou les dispersions fines rapporté au poids du ou des monomères finement dispersés vaut habituellement au plus 3%.

Le poids du ou des agents émulsionnants ioniques compris dans le ou les latex semences rapporté au poids du ou des polymères d'ensemencement vaut habituellement au moins 0,5%.

Le poids du ou des agents émulsionnants ioniques compris dans le ou les latex semences rapporté au poids du ou des polymères d'ensemencement vaut habituellement au plus 3%.

Le poids du ou des agents émulsionnants ioniques compris dans la ou les solutions d'agent(s) émulsionnant(s) ionique(s) rapporté au poids du ou des monomères tels quels vaut habituellement au moins 0,2% et de préférence au moins 0,4%.

Le poids du ou des agents émulsionnants ioniques compris dans la ou les solutions d'agent(s) émulsionnant(s) ionique(s) rapporté au poids du ou des monomères tels quels vaut habituellement au plus 3% et de préférence au plus 1,5%.

Le ou les agents réducteurs hydrosolubles sont choisis habituellement parmi l'acide ascorbique, les sels réducteurs hydrosolubles des oxyanions du soufre et les sels réducteurs hydrosolubles des métaux des familles VB, VIB, VIIB, VIII, IB, IIB et de préférence parmi les sels réducteurs hydrosolubles des oxyanions du soufre.

Le ou les agents réducteurs hydrosolubles sont habituellement compris dans une ou plusieurs solutions d'agents réducteur(s) hydrosoluble(s).

Le nombre de moles total du ou des agents réducteurs hydrosolubles rapporté au nombre de moles total du ou des initiateurs oléosolubles vaut habituellement moins de 50%.

La température de polymérisation de consigne vaut habituellement au moins -50°C, de préférence au moins 0°C, de manière particulièrement préférée au moins 30°C et de manière tout particulièrement préférée au moins 45°C.

La température de polymérisation de consigne vaut habituellement au plus 250°C, de préférence au plus 100°C, de manière particulièrement préférée au plus 80°C et de manière tout particulièrement préférée au plus 65°C.

Mis à part les particularités expliquées ci-avant, les quantités des substances intervenant à la polymérisation et les conditions générales de la polymérisation dans le procédé selon l'invention ne diffèrent pas de celles habituellement mises en oeuvre à la polymérisation radicalaire de monomères, particulièrement de monomères vinyliques halogénés et plus particulièrement du chlorure de vinyle.

La quantité totale de monomère(s) transformée en polymère(s) vaut habituellement au moins 50%, de préférence au moins 70% et de manière particulièrement préférée au moins 80%.

Après la polymérisation, les latex sont habituellement soumis à une épuration en le ou les monomères résiduaires.

Après la polymérisation, les latex peuvent éventuellement en outre être additivés par une ou plusieurs substances choisies habituellement parmi les agents émulsionnants, les agents stabilisants thermiques, les agents abaisseurs de viscosité, les agents antistatiques, les charges et les pigments.

Après la polymérisation, les latex peuvent éventuellement en outre être mélangés à un ou plusieurs autres latex. De préférence, les latex ne sont pas mélangés à d'autres latex.

Après là polymérisation, les latex sont habituellement soit utilisés tels quels, soit traités de manière à en récupérer le ou les polymères sous la forme de résines.

Après la polymérisation, les latex sont de préférence traités de manière à en récupérer le ou les polymères sous la forme de résines.

Le traitement de récupération du ou des polymères sous la forme de résines peut être réalisé par tout procédé de séparation connu ou par leur combinaison ; il est de préférence réalisé par l'un des procédés suivants ou par une combinaison de ceux-ci :
- filtration ou ultrafiltration
- coagulation
- décantation
- essorage
- écaillage
- lyophilisation
- séchage par atomisation

Le traitement de récupération du ou des polymères sous la forme de résines est de manière particulièrement préférée réalisé par séchage par atomisation.

Le séchage par atomisation des latex peut être réalisé au moyen de tout type de sécheur atomiseur connu ; il est de préférence réalisé:
- soit au moyen de sécheurs atomiseurs équipés d'un dispositif tournant à grande vitesse et percé de fins orifices desquels giclent les latex dans un courant d'air chaud
- soit au moyen de sécheurs atomiseurs équipés d'une ou plusieurs buses de pulvérisation à un ou plusieurs fluides ; le fluide est le latex, les autres fluides éventuels (désignés habituellement « fluides de pulvérisation ») sont de l'air, de la vapeur ou des mélanges d'air et de vapeur ; les fluides sont pulvérisés habituellement dans un courant d'air chaud.

Après la récupération du ou des polymères sous la forme de résines, ces résines sont habituellement soit utilisées telles quelles, soit traitées de manière à en régler la granulométrie.

Après la récupération du ou des polymères sous la forme de résines, ces résines sont de préférence traitées de manière à en régler la granulométrie.

Le traitement de réglage de la granulométrie peut être réalisé par tout procédé connu ou par leur combinaison. Le traitement de réglage de la granulométrie est de préférence réalisé par l'un des procédés suivants ou par une combinaison de ceux-ci :
- broyage
- classification
- tamisage.

La présente invention a également pour objet des latex ayant d'excellentes propriétés, préparés par un procédé particulièrement performant.

A cet effet, l'invention concerne les latex préparés par le procédé selon l'invention.

Le ou les polymères des latex préparés par le procédé selon l'invention ont une distribution de leurs particules élémentaires qui peut être quelconque.

Le ou les polymères des latex préparés par le procédé selon l'invention ont une distribution de leurs particules élémentaires telle qu'habituellement au plus 50% et de préférence au plus 30% en poids de celles-ci ont un diamètre inférieur à 400 nm.

En outre, le ou les polymères des latex préparés par le procédé selon l'invention ont une distribution de leurs particules élémentaires telle qu'habituellement au moins 2%, de préférence au moins 6% et de manière particulièrement préférée au moins 10% en poids de celles-ci ont un diamètre inférieur à 400 nm.

En outre, le ou les polymères des latex préparés par le procédé selon l'invention ont une distribution de leurs particules élémentaires dont le nombre de familles vaut habituellement au moins 2.

En outre, le ou les polymères des latex préparés par le procédé selon l'invention ont une distribution de leurs particules élémentaires dont le nombre de familles vaut habituellement au plus le nombre de latex semences plus 2, de préférence au plus le nombre de latex semences plus 1 et de manière particulièrement préférée au plus 2.

En outre, le ou les polymères des latex préparés par le procédé selon l'invention ont une distribution de leurs particules élémentaires dont habituellement au moins une et de préférence une et une seule famille a un diamètre moyen en poids valant au moins 400 nm.

En outre, le ou les polymères des latex préparés par le procédé selon l'invention ont une distribution de leurs particules élémentaires dont habituellement au moins une et de préférence chaque famille sauf une a un diamètre moyen en poids valant habituellement au plus 350 nm, de préférence au plus 250 nm et de manière particulièrement préférée au plus 180 nm.

En outre, le ou les polymères des latex préparés par le procédé selon l'invention ont une distribution de leurs particules élémentaires dont habituellement au moins une et de préférence chaque famille sauf une a un diamètre moyen en poids valant habituellement au moins 90 nm, de préférence au moins 105 nm et de manière particulièrement préférée au moins 120 nm.

Le ou les latex préparés par le procédé selon l'invention sont habituellement soit utilisés sous la forme de latex pour la préparation notamment d'encres ou de films, soit traités de manière à en récupérer les polymères notamment sous la forme de résines.

La présente invention a enfin pour objet des résines de polymère(s) ayant d'excellentes propriétés, préparées par un procédé particulièrement performant.

A cet effet, l'invention concerne les résines de polymère(s) préparées par le procédé selon l'invention.

Les résines de polymère(s) préparées par le procédé selon l'invention sont habituellement utilisées pour la préparation de compositions de polymère(s), plastifiées ou non, dans lesquelles le(s) polymère(s) est (sont) habituellement soit à l'état de poudre, soit à l'état dispersé, soit encore à l'état dissous (c'est notamment le cas des compositions des résines « solubles » des polymères du chlorure de vinylidène pour applications films). En particulier, les résines des polymères du chlorure de vinyle comprenant au moins 80% en poids d'unités - CH₂-CHCl- selon l'invention sont habituellement utilisées pour la préparation de compositions plastisols.

Le procédé de préparation de latex selon l'invention présente de multiples avantages.

Tout d'abord, le procédé de préparation de latex selon l'invention est particulièrement productif et économiquement avantageux :
- il permet de préparer des latex très concentrés (avec une teneur en matières sèches supérieure à 50%) remarquablement stables ; à titre indicatif, la productivité est augmentée d'au moins 25% par rapport au procédé de préparation de latex par polymérisation radicalaire en batch en microsuspension, et ce sans investissement supplémentaire
- ce procédé est tel qu'il ne nécessite pas de mettre en oeuvre à la polymérisation une quantité élevée de latex semence(s), laquelle occupe alors un volume important dans le réacteur et affecte de ce fait la productivité du procédé.

Ensuite, le procédé de préparation de latex selon l'invention est particulièrement simple à mettre en oeuvre:
- ce procédé est tel que la polymérisation ne nécessite pas la mise en oeuvre de latex semence(s) difficile(s) à préparer, à manipuler et à stocker
- ce procédé est tel que la polymérisation se satisfait habituellement de la mise en oeuvre de latex semence(s) facile(s) à préparer, à manipuler et à stocker

Ensuite, le procédé de préparation de latex selon l'invention est particulièrement facile à maîtriser et les produits, latex et résines, préparés par ce procédé ont des caractéristiques et des propriétés remarquablement constantes :
- ce procédé est tel que pas ou extrêmement peu de particules sont créées à la polymérisation, selon des mécanismes compliqués
- le latex préparé selon l'invention comprend des particules élémentaires de polymère(s) dont la distribution est remarquablement constante.

Enfin, le procédé de préparation de latex selon l'invention permet de préparer des produits ayant un niveau particulièrement élevé de propriétés.
- il permet de préparer des latex qui ont une stabilité mécanique extrêmement élevée (même si leur teneur en matières sèches est supérieure à 50%)
- il permet de préparer des latex et des résines, lesquels permettent de préparer des compositions et des articles, qui ont d'excellentes propriétés, notamment une stabilité thermique élevée, une coloration initiale peu prononcée, une basse rhéologie des plastisols.

Les termes utilisés dans le présent document sont explicités ci-après.

Par quantité totale d'un réactif, on entend la somme des quantités de ce réactif introduites dans le réacteur, sous quelque forme et à quelque moment que ce soit. A titre d'exemples de formes d'introduction des réactifs, on peut citer notamment les dispersions fines, les latex semences, les réactifs tels quels et les solutions.

Par dispersion fine, on entend désigner une dispersion stable ou émulsion de gouttelettes d'au moins un monomère dans au moins un liquide de dispersion.

Par latex, on entend désigner une dispersion stable ou émulsion de particules élémentaires d'au moins un polymère dans au moins un liquide de dispersion.

Par substance hydrosoluble, on entend désigner une substance ayant, à température ambiante, une solubilité dans l'eau supérieure à sa solubilité dans les huiles.

Par substance oléosoluble, on entend désigner une substance ayant, à température ambiante, une solubilité dans les huiles supérieure à sa solubilité dans l'eau.

A titre d'exemples de monomères éthyléniquement insaturés, on peut citer les esters vinyliques comme l'acétate de vinyle, les esters acryliques comme l'acrylate de n-butyle et l'acrylate de [2-éthyl]hexyle, les esters méthacryliques comme le méthacrylate de méthyle et le méthacrylate de n-butyle, les nitriles et les amides acryliques ou méthacryliques, les monomères styréniques comme le styrène, les monomères oléfiniques comme l'éthylène, le propylène et le butadiène.

Par monomères vinyliques halogénés, on entend désigner les monomères éthyléniquement insaturés comprenant un ou plusieurs atomes d'halogènes, identiques ou différents, et ne comprenant pas d'hétéroatome autre que le(s) atome(s) d'halogène.

A titre d'exemples de monomères vinyliques halogénés, on peut citer les monomères vinyliques halogénés comprenant du chlore et les monomères vinyliques halogénés comprenant du fluor, ainsi que d'autres monomères vinyliques halogénés comme le bromure de vinyle.

A titre d'exemples de monomères vinyliques halogénés comprenant du chlore, on peut citer le chlorure de vinyle, le chlorure de vinylidène, le trichloroéthylène, le chloroprène et le chlorotrifluoroéthylène.

A titre d'exemples de monomères vinyliques halogénés comprenant du fluor, on peut citer le fluorure de vinyle, le fluorure de vinylidène, le trifluoroéthylène, le tétrafluoroéthylène, l'hexafluoropropylène et le chlorotrifluoroéthylène.

Par polymères vinyliques halogénés, on entend désigner aussi bien les homopolymères de monomères vinyliques halogénés que les copolymères que forment ces monomères entre eux ou avec d'autres monomères éthyléniquement insaturés tels que les oléfines, les esters, nitriles et amides acryliques et méthacryliques, ainsi que les esters vinyliques comme l'acétate de vinyle.

A titre d'exemples de polymères vinyliques halogénés, on peut citer les polymères vinyliques halogénés comprenant du chlore et les polymères vinyliques halogénés comprenant du fluor comme les polymères du fluorure de vinylidène, de l'hexafluoropropylène ou du chlorotrifluoroéthylène.

A titre d'exemples de polymères vinyliques halogénés comprenant du chlore, on peut citer les polymères du chlorure de vinyle, du chlorure de vinylidène, du chlorotrifluoroéthylène et du chloroprène.

A titre d'exemples d'initiateurs oléosolubles, on peut citer les peroxydes organiques oléosolubles, les diazocomposés oléosolubles et d'autres initiateurs oléosolubles comme les diméthyldiphénylalcanes.

Les peroxydes organiques oléosolubles peuvent être classés selon le nombre d'atomes de carbone qu'ils comprennent. Selon ce classement, on peut distinguer : (a) les peroxydes organiques oléosolubles comprenant moins de 10 atomes de carbone et (b) les peroxydes organiques oléosolubles comprenant au moins 10 atomes de carbone.

A titre d'exemples de peroxydes organiques oléosolubles de la classe (a), on peut citer le peroxydicarbonate de diéthyle (en C₆) et le peroxydicarbonate de diisopropyle (en C₈).

Parmi les peroxydes organiques oléosolubles de la classe (b), on peut distinguer : (b-1) les peroxydes organiques oléosolubles comprenant entre 10 et 20 atomes de carbone et (b-2) les peroxydes organiques oléosolubles comprenant au moins 20 atomes de carbone.

A titre d'exemples de peroxydes organiques oléosolubles de la classe (b-1), on peut citer le peroxyde de dibenzoyle (en C₁₄), et pernéodécanoate de tert-butyle (en C₁₄) et le pernéodécanoate de cumyle (en C₁₉).

A titre d'exemples de peroxydes organiques oléosolubles de la classe (b-2), on peut citer les peroxydes de diacyle oléosolubles comprenant au moins 20 atomes de carbone, les peroxydicarbonates de dialkyle oléosolubles comprenant au moins 20 atomes de carbone et d'autres peroxydes organiques oléosolubles comprenant au moins 20 atomes de carbone comme le 2,5-diméthyhexane 2,5-diperbenzoate.

A titre d'exemples de peroxydes de diacyle oléosolubles comprenant au moins 20 atomes de carbone, on peut citer le peroxyde de didécanoyle (en C₂₀) et le peroxyde de dilauroyle (en C₂₄).

A titre d'exemples de peroxydicarbonates de dialkyle comprenant au moins 20 atomes de carbone, on peut citer le peroxydicarbonate de dimyristyle (en C₃₀) et le peroxydicarbonate de di[4-tert-butyl]cyclohexyle (en C₂₂).

Les diazocomposés oléosolubles peuvent également être classés notamment selon le nombre d'atomes de carbone qu'ils comprennent. Selon ce classement, on peut distinguer : (a) les diazocomposés oléosolubles comprenant moins de 10 atomes de carbone et (b) les diazocomposés oléosolubles comprenant au moins 10 atomes de carbone.

A titre d'exemple de diazocomposé oléosoluble de la classe (a), on peut citer le 2,2'-azobisisobutyronitrile (en C₈).

A titre d'exemple de diazocomposé oléosoluble de la classe (b), on peut citer l'azobis([2,4-diméthyl]valéronitrile) (en C₁₄).

A titre d'exemples d'initiateurs hydrosolubles, on peut citer notamment les peroxydes inorganiques hydrosolubles, les hydroperoxydes organiques hydrosolubles comme l'hydroperoxyde de cumyle ou de tert-butyle, les peroxydes organiques hydrosolubles comme le peroxyde de succinoyle, les diazocomposés hydrosolubles comme le 4,4'-azobis(4-cyanovalérate) d'ammonium.

A titre d'exemples de peroxydes inorganiques hydrosolubles, on peut citer l'eau oxygénée, les perborates hydrosolubles et les persulfates hydrosolubles.

A titre d'exemples de persulfates hydrosolubles, on peut citer les persulfates de sodium, d'ammonium et de potassium.

A titre d'exemples d'agents émulsionnants ioniques, on peut citer les agents émulsionnants cationiques, les agents émulsionnants amphotères et les agents émulsionnants anioniques.

A titre d'exemples d'agents émulsionants cationiques, on peut citer les chlorhydrates d'amine primaire, éventuellement éthoxylés, et les sels d'ammonium quaternaires.

A titre d'exemples d'agents émulsionnants anioniques, on peut citer les sulfosuccinates de monoalkyle sodiques éthoxylés ou non, les phosphates de nonylphényle sodiques ou ammoniques éthoxylés ou non, les sulfosuccinamates sodiques, ainsi que les émulsionnants des classes (I) à (V) définies ci-après.

A titre d'exemples de sulfates d'alkyle (I), on peut citer les sulfates d'alkyles en C₆, C₈, C₁₀, C₁₂, C₁₄, C₁₆ et C₁₈, linéaires ou ramifiés, éthoxylés ou non, ammoniques ou sodiques.

A titre d'exemples de sulfonates d'alkyle (II), on peut citer les sulfonates d'alkyles primaires ou secondaires sodiques, comme respectivement le MERSOLAT^{®} H76 et l'HOSTAPUR^{®} SAS.

A titre d'exemples de sulfonates d'alkylaryle (III), on peut citer les sulfonates de nonylphényle éthoxylés, de n-dodécylbenzène et de tétrapropylbenzène, sodiques ou ammoniques.

A titre d'exemples de sulfosuccinates de dialkyle (IV), on peut citer les sulfosuccinates sodiques de di-[2-éthyl]hexyle, de diisodécyle et de bistridécyle.

A titre d'exemples de carboxylates d'alkyle (V), on peut citer les laurates, myristates, palmitates et stéarates, sodiques, ammoniques ou potassiques.

A titre d'exemples d'agents émulsionnants non ioniques, on peut citer les condensats d'oxyde d'éthylène sur acides gras ou sur alcools gras.

A titre d'exemples d'agents stabilisants mécaniques, on peut citer les alcools gras en C₆-C₂₀, les alcanes en C₆-C₂₀, les diesters des α,ω-diacides carboxyliques aliphatiques saturés et les diesters de l'acide phtalique.

Par agent suppresseur de pic, on entend désigner un agent régulateur de la cinétique de polymérisation. A titre d'exemples d'agents suppresseurs de pics, on peut citer le butylhydroxyanisole et le butylhydroxytoluène.

A titre d'exemples d'agents allongeur de chaîne, on peut citer le maléate de diallyle et le phtalate de diallyle.

A titre d'exemples d'agents de transfert, on peut citer le chloroforme, le trichlorofluorométhane et les carbonates de dialkyle en C₂-C₅, linéaires ou ramifiés.

Les exemples qui suivent sont destinés à illustrer l'invention sans pour autant en limiter la portée.

### Exemple 1 (selon l'invention)

Préparation du latex semence (latex semence S). Dans un réacteur de 3001 équipé d'un agitateur et d'une double enveloppe, on a introduit tout d'abord 129,8 kg d'eau déminéralisée, 70 cm³ d'une solution aqueuse de sulfate de cuivre pentahydraté à 5,4 g/l et 580 g d'une solution de sulfonate de tétrapropylbenzène à 180 g/kg. On a fermé le réacteur et on a mis l'agitateur en marche. On a effectué un vide dans le réacteur.

On a introduit 95,0 kg de chlorure de vinyle dans le réacteur.

On a porté le contenu du réacteur à 51°C. Une fois cette température atteinte, on a introduit dans le réacteur 2,381 1 d'une solution aqueuse d'ammoniac à 40,0 g/l. Ensuite, on a introduit dans le réacteur 500 cm³ d'une solution aqueuse de persulfate ammonique à 66,5 g/l (ce moment est désigné conventionnellement par « tₒ »).

Pendant la polymérisation, on a introduit dans le réacteur 7,34 kg d'une solution aqueuse de sulfonate de tétrapropylbenzène à 180 g/kg.

A chute de pression détectée, soit dans le cas qui nous occupe à tₒ + 378 min, on a porté le contenu du réacteur à température plus élevée et on a procédé à un traitement d'épuration en chlorure de vinyle résiduaire.

On a vidangé le latex du réacteur. On a filtré le latex sur un tamis à mailles distantes de 1 mm. On a introduit le latex dans un réservoir de stockage. On a ajouté enfin au latex 25,01 d'eau déminéralisée.

On a prélevé un échantillon de latex dans le réservoir de stockage et on en a mesuré la teneur en matières sèches par densimétrie : la teneur en matières sèches du latex semence S était de 34,1%.

On a déterminé également la distribution des particules élémentaires de polymère du latex semence par diffraction lumineuse au moyen d'un équipement COULTER^{®} LS230 : la distribution des particules élémentaires de polymère du latex semence S était unimodale ; le diamètre moyen de ces particules élémentaires valait 105 nm.

Préparation de la dispersion fine (1^{ère} partie). Dans un autoclave de mélange de 3001 équipé d'un agitateur et d'une double enveloppe, on a introduit tout d'abord 50,6 kg d'eau déminéralisée. On a introduit dans l'autoclave de mélange 3,96 kg d'une solution aqueuse de sulfonate de tétrapropylbenzène à 170 g/kg, 283,36 g de peroxyde de dilauroyle, 80,68 g de peroxydicarbonate de dimyristyle et 0,948 g de butylhydroxyanisole. On a fermé l'autoclave de mélange et on a mis l'agitateur en marche. On a ensuite effectué le vide dans l'autoclave de mélange.

Chargement des réactifs dans le réacteur (1^{ère} partie). Dans un réacteur de 3001 équipé d'un agitateur et d'une double enveloppe, on a introduit successivement 50,6 kg d'eau déminéralisée, 3,96 kg d'une solution aqueuse de sulfonate de tétrapropylbenzène à 170 g/kg et 18,9 kg du latex semence S (dont environ 6,4 kg de polymère d'ensemencement et 12,5 kg d'eau). On a fermé le réacteur et on a mis l'agitateur en marche. On a ensuite effectué le vide sur le réacteur.

Préparation de la dispersion fine (2^{ème} partie). On a introduit 46,0 kg de chlorure de vinyle dans l'autoclave de mélange et on y a maintenu une agitation vive pour y constituer une dispersion aqueuse « ordinaire » homogène de gouttelettes du chlorure de vinyle comprenant les initiateurs oléosolubles et l'agent suppresseur de pic.

Chargement des réactifs dans le réacteur (2^{ème} partie). On a introduit 46,0 kg de chlorure de vinyle dans le réacteur.

Préparation de la dispersion fine (3^{ème} partie) et chargement des réactifs dans le réacteur (3^{ème} partie). On a mis en service un homogénéiseur à haute pression reliant l'autoclave de mélange au réacteur. On a réglé la pression d'homogénéisation. On a transféré le contenu de l'autoclave de mélange dans le réacteur via cet homogénéiseur. Les conditions de fonctionnement de l'homogénéiseur ont été telles qu'au sortir de celui-ci, on a obtenu une dispersion aqueuse fine de gouttelettes de chlorure de vinyle comprenant les initiateurs oléosolubles et l'agent suppresseur de pic.

Polymérisation. On a porté le contenu du réacteur à 51°C. Une fois cette température atteinte, on a introduit dans le réacteur 1,251 1 d'une solution aqueuse d'ammoniac à 32,7 g/l

En cours de polymérisation, on a introduit dans le réacteur 42,0 kg de chlorure de vinyle.

Une fois la chute de pression (ΔP = 1 bar) détectée, on a relevé la durée écoulée depuis tₒ et on a porté le contenu du réacteur à une température plus élevée.

Opérations de fin. On a procédé à un traitement d'épuration en chlorure de vinyle résiduaire.

On a vidangé le latex et on a assaini le réacteur.

On a recueilli le croûtage humide présent à l'intérieur du réacteur, notamment sur ses parois et sur les pales de l'agitateur. Après pesée, le croûtage humide a été séché à l'étuve. Le croûtage sec a été pesé à son tour.

On a filtré le latex sur un tamis à mailles distantes de 1 mm. On a recueilli les grumeaux humides refusés sur ce tamis. Après pesée, les grumeaux humides ont été séchés à l'étuve. Les grumeaux secs ont été pesés à leur tour.

On a prélevé un échantillon de latex et on en a mesuré la teneur en matières sèches par densimétrie et la distribution des particules élémentaires par sédimentométrie.

Séchage du latex et récupération de la résine. Le solde du latex a été séché par atomisation. On a récupéré la résine sèche de polymère du chlorure de vinyle et on l'a broyée. On a mesuré enfin le nombre K du polymère suivant la norme ISO 1628-2.

Résultats des déterminations. La durée de la polymérisation depuis tₒ jusqu'à ΔP = 1 bar a été de 363 min.

La quantité de croûtage humide qui a été recueillie à l'intérieur du réacteur valait 2,82 kg. La quantité de croûtage sec valait 0,76 kg.

La quantité de grumeaux humides valait 3,6 kg. La quantité de grumeaux secs valait 1,95 kg.

La teneur en matières sèches du latex valait 50,6%.

La distribution des particules élémentaires du polymère du latex était la suivante : distribution bimodale comprenant :
- environ 83% en poids d'une famille de « grosses » particules élémentaires à distribution étalée d'environ 0,83 µm de diamètre moyen en poids
- environ 17% en poids d'une famille de « fines » particules élémentaires à distribution relativement étroite d'environ 0,16 µm de diamètre moyen en poids.

Le nombre K du polymère du chlorure de vinyle valait 72,2.

### Exemple 2 (exemple de comparaison)

On a procédé comme à l'exemple 1, hormis que:
- on n'a pas introduit de latex semence dans le réacteur
- les quantités d'eau déminéralisée qui ont été introduites dans l'autoclave de mélange d'une part et dans le réacteur d'autre part valaient chacune 56,8 kg
- la quantité de chlorure de vinyle qui a été introduite dans le réacteur en cours de polymérisation valait 48,6 kg.

Les quantités d'eau déminéralisée et de chlorure de vinyle ont été corrigées par rapport à l'exemple 1, de sorte que la teneur en matières sèches maximum accessible (correspondant à un taux de conversion théorique de 100%) fût identique pour les 2 essais présentés à titre d'exemples.

Déroulement de l'essai et résultats des déterminations. La durée de la polymérisation depuis tₒ jusqu'à ΔP = 1 bar a été de 402 min.

La quantité de croûtage humide recueillie à l'intérieur du réacteur valait 5,80 kg. La quantité du croûtage sec valait 1,19 kg.

Le latex était partiellement coagulé : il comprenait une quantité extrêmement élevée de grumeaux (supérieure à 20 kg), lesquels obstruaient le filtre. La filtration a dû être arrêtée ; les grumeaux n'ont pu être quantifiés plus précisément. Le latex n'a pu être séché au moyen d'un sécheur atomiseur.

La distribution des particules élémentaires du latex (qui a été mesurée sur un échantillon préalablement filtré) était unimodale : elle comprenait une famille de « grosses » particules élémentaires à distribution étalée d'environ 0,85 µm de diamètre moyen en poids.

Le nombre K du polymère du chlorure de vinyle (préparé par séchage d'un échantillon de latex à l'étuve) valait 71,9.

## Revendications

1. Procédé de préparation de latex par polymérisation radicalaire en batch d'un ou plusieurs monomères, **caractérisé en ce qu'**il fait intervenir à la polymérisation :
(a) une ou plusieurs dispersions fines comprenant un ou plusieurs monomères finement dispersés, au moins une dispersion fine comprenant un ou plusieurs initiateurs oléosolubles,
et
(b) un ou plusieurs latex semences comprenant un ou plusieurs polymères d'ensemencement.

2. Procédé de préparation de latex selon la revendication 1, **caractérisé en ce qu'**au plus un latex semence comprend un ou plusieurs initiateurs oléosolubles.

3. Procédé de préparation de latex selon la revendication 1, **caractérisé en ce qu'**au moins 50% en poids des monomères sont choisis parmi les monomères vinyliques halogénés.

4. Procédé de préparation de latex selon la revendication 1, **caractérisé en ce que** le poids du ou des monomères finement dispersés rapporté au poids total du ou des monomères vaut au moins 1%.

5. Procédé de préparation de latex selon la revendication 1, **caractérisé en ce qu'**au moins 50% en poids des polymères d'ensemencement sont choisis parmi les polymères vinyliques halogénés.

6. Procédé de préparation de latex selon la revendication 1 ou 5, **caractérisé en ce que** le ou les polymères d'ensemencement ont une distribution de leurs particules élémentaires telle qu'au moins 50% en poids de celles-ci ont un diamètre inférieur à 400 nm.

7. Procédé de préparation de latex selon l'une quelconque des revendications 1 et 5 à 6, **caractérisé en ce que** le poids du ou des polymères d'ensemencement rapporté au poids total du ou des monomères vaut au moins 1%.

8. Procédé de préparation de latex selon l'une quelconque des revendications 1 et 5 à 7, **caractérisé en ce que** le poids du ou des polymères d'ensemencement rapporté au poids total du ou des monomères vaut au plus 25%.

9. Procédé de préparation de latex selon la revendication 1, **caractérisé en ce qu'**après la polymérisation, les latex sont traités de manière à en récupérer le ou les polymères sous la forme de résines.

10. Procédé de préparation de latex selon la revendication 9, **caractérisé en ce qu'**après la récupération du ou des polymères sous la forme de résines, ces résines sont traitées de manière à en régler la granulométrie.

11. Procédé de préparation de latex selon la revendication 1, **caractérisé en ce que** une ou plusieurs dispersions fines comprennent, en outre et indépendamment les unes des autres, un ou plusieurs agents stabilisants mécaniques.

12. Procédé de préparation de latex selon la revendication 1, **caractérisé en ce que** un ou plusieurs latex semences comprennent, en outre et indépendamment les uns des autres, un ou plusieurs agents stabilisants mécaniques.

13. Procédé de préparation de latex selon la revendication 1, **caractérisé en ce que** il fait intervenir en outre, à la polymérisation, une ou plusieurs substances telles quelles et/ou une ou plusieurs solutions d'une ou plusieurs substances et/ou une ou plusieurs dispersions d'une ou plusieurs substances choisies parmi les agents stabilisants mécaniques.

14. Procédé de préparation de latex selon l'une quelconque des revendications 11 à 13, **caractérisé en ce que** les agents stabilisants mécaniques sont choisis parmi les alcools gras en C6-C20, les alcanes en C6-C20, les diesters des α-ω-diacides carboxyliques aliphatiques saturés et les diesters de l'acide phtalique.

15. Procédé de préparation de latex selon la revendication 14, **caractérisé en ce que** les agents stabilisants mécaniques sont des diesters des α-ω-diacides carboxyliques aliphatiques saturés.

16. Procédé de préparation de compositions de polymére(s) qui comprend l'utilisation d'un latex préparé par le procédé selon l'une quelconque des revendications 1 à 8 et 11 à 15 ou une résine préparée par le procédé selon la revendication 9 ou 10.

17. Procédé selon la revendication 16, **caractérisé en ce qu'**il comprend l'utilisation de résines de polymère(s) préparées par le procédé selon l'une quelconque des revendications 9 ou 10, le(s)dit(s) polymères étant soit à l'état de poudre, soit à l'état dispersé, soit encore à l'état dissous.

18. Procédé selon la revendication 17, **caractérisé en ce que** les résines de polymère(s) sont des résines de polymère(s) du chlorure de vinyle comprenant au moins 80 % en poids d'unités -CH₂-CHCl- et les compositions de polymère(s) sont des compositions plastisols.

19. Procédé pour la préparation d'articles qui comprend l'utilisation d'un latex préparé par le procédé selon l'une quelconque des revendications 1 à 8 et 11 à 15 ou une résine préparée par le procédé selon la revendication 9 ou 10.

## Claims

1. Process for the preparation of latices by batchwise radical polymerization of one or more monomers, **characterized in that** it involves, in the polymerization:
(a) one or more fine dispersions comprising one or more finely dispersed monomers, at least one fine dispersion comprises one or more oil-soluble initiators
and
(b) one or more seed latices comprising one or more seeding polymers.

2. Process for the preparation of latices according to Claim 1, **characterized in that** at most one seed latex comprises one or more oil-soluble initiators.

3. Process for the preparation of latices according to Claim 1, **characterized in that** at least 50 % by weight of the monomers are chosen from halogenated vinyl monomers.

4. Process for the preparation of latices according to Claim 1, **characterized in that** the weight of the finely dispersed monomer or monomers with respect to the total weight of the monomer or monomers has a value of at least 1 %.

5. Process for the preparation of latices according to Claim 1, **characterized in that** at least 50 % by weight of the seeding polymers are chosen from halogenated vinyl polymers.

6. Process for the preparation of latices according to Claim 1 or 5, **characterized in that** the seeding polymer or polymers have a distribution of their elementary particles such that at least 50 % by weight of the latter have a diameter of less than 400 nm.

7. Process for the preparation of latices according to any one of Claims 1 and 5 to 6, **characterized in that** the weight of the seeding polymer or polymers with respect to the total weight of the monomer or monomers has a value of at least 1 %.

8. Process for the preparation of latices according to any one of Claims 1 and 5 to 7, **characterized in that** the weight of the seeding polymer or polymers with respect to the total weight of the monomer or monomers has a value of at most 25 %.

9. Process for the preparation of latices according to Claim 1, **characterized in that**, after the polymerization, the latices are treated so as to recover therefrom the polymer or polymers in the form of resins.

10. Process for the preparation of latices according to Claim 9, **characterized in that**, after the recovery of the polymer or polymers in the form of resins, these resins are treated so as to adjust the particle size thereof.

11. Process for the preparation of latices according to Claim 1, **characterized in that** one or more fine dispersions comprise, in addition and independently of one another, one or more mechanical stabilizers.

12. Process for the preparation of latices according to Claim 1, **characterized in that** one or more seed latices comprise, in addition and independently of one another, one or more mechanical stabilizers.

13. Process for the preparation of latices according to Claim 1, **characterized in that** it involves in addition, in the polymerization, one or more substances as such and/or one or more solutions of one or more substances and/or one or more dispersions of one ore substances chosen from mechanical stabilizers.

14. Process for the preparation of latices according to anyone of Claims 11 to 13, **characterized in that** the mechanical stabilizers are chosen from C₆-C₂₀ alcohols, C₆-C₂₀ alkanes, diesters of saturated aliphatic α,ω-dicarboxylic acids and phtalic acid diesters.

15. Process for the preparation of latices according to Claim 14, **characterized in that** the mechanical stabilizers are diesters of saturated aliphatic α,ω-dicarboxylic acids.

16. Process for the preparation of polymer compositions, which comprises using a polymer latex prepared by the process according to anyone of Claims 1 to 8 and 11 to 15 or a polymer resin prepared by the process according to Claim 9 or 10.

17. Process according to claim 16, **characterized in that** it comprises using a polymer resin prepared by the process according to Claim 9 or 10, said polymer resin being either in the powder form, or in the disperse form, or alternatively in the dissolved form.

18. Process according to claim 17, **characterized in that** the polymer resin is a vinyl chloride polymer(s) comprising at least 80 % by weight of -CH₂-CHCl- units and the polymer composition is a plastisol composition.

19. Process for the preparation of polymer articles, which comprises using a polymer latex prepared by the process according to anyone of Claims 1 to 8 and 11 to 15 or a polymer resin prepared by the process according to Claim 9 or 10.

## Patentansprüche

1. Verfahren zur Herstellung von Latex durch radikalische Batchpolymerisation von einem oder mehreren Monomeren, **dadurch gekennzeichnet, dass** in der Polymerisation :
(a) eine oder mehrere feine Dispersionen, umfassend ein oder mehrere fein dispergierte Monomere, wobei wenigstens eine feine Dispersion einen oder mehrere öllösliche Initiatoren umfasst
und
(b) ein oder mehrere Keim-Latices, umfassend ein oder mehrere keimbildende Polymere,
eingesetzt werden.

2. Verfahren zur Herstellung von Latex nach Anspruch 1, **dadurch gekennzeichnet, dass** höchstens ein Keim-Latex einen oder mehrere öllösliche Initiatoren umfasst.

3. Verfahren zur Herstellung von Latex nach Anspruch 1, **dadurch gekennzeichnet, dass** wenigstens 50 Gew.-% der Monomere aus den Vinylhalogenid-Monomeren ausgewählt sind.

4. Verfahren zur Herstellung von Latex nach Anspruch 1, **dadurch gekennzeichnet, dass** das Gewicht des oder der fein dispergierten Monomere, bezogen auf das Gesamtgewicht des oder der Monomere, wenigstens 1 % beträgt.

5. Verfahren zur Herstellung von Latex nach Anspruch 1, **dadurch gekennzeichnet, dass** wenigstens 50 Gew.-% der keimbildenden Polymere aus den Vinylhalogenid-Polymeren ausgewählt sind.

6. Verfahren zur Herstellung von Latex nach einem der Ansprüche 1 oder 5, **dadurch gekennzeichnet, dass** das oder die keimbildenden Polymere eine solche Verteilung ihrer Basisteilchen besitzen, dass wenigstens 50 Gew.-% davon einen Durchmesser kleiner als 400 nm aufweisen.

7. Verfahren zur Herstellung von Latex nach einem der Ansprüche 1 und 5 bis 6, **dadurch gekennzeichnet, dass** das Gewicht des oder der keimbildenden Polymere, bezogen auf das Gesamtgewicht des oder der Monomere, wenigstens 1 % beträgt.

8. Verfahren zur Herstellung von Latex nach einem der Ansprüche 1 und 5 bis 7, **dadurch gekennzeichnet, dass** das Gewicht des oder der keimbildenden Polymere, bezogen auf das Gesamtgewicht des oder der Monomere, höchstens 25 % beträgt.

9. Verfahren zur Herstellung von Latex nach Anspruch 1, **dadurch gekennzeichnet, dass** die Latices nach der Polymerisation so behandelt werden, dass daraus das oder die Polymere in Form von Harzen gewonnen werden.

10. Verfahren zur Herstellung von Latex nach Anspruch 9, **dadurch gekennzeichnet, dass** nach der Gewinnung des oder der Polymere in Form von Harzen diese Harze so behandelt werden, dass die Korngröße gesteuert wird.

11. Verfahren zur Herstellung von Latex nach Anspruch 1, **dadurch gekennzeichnet, dass** eine oder mehrere feine Dispersionen, unter anderem und unabhängig voneinander, ein oder mehrere mechanische Stabilisierungsmittel umfassen.

12. Verfahren zur Herstellung von Latex nach Anspruch 1, **dadurch gekennzeichnet, dass** ein oder mehrere Keim-Latices, unter anderem und unabhängig voneinander, ein oder mehrere mechanische Stabilisierungsmittel umfassen.

13. Verfahren zur Herstellung von Latex nach Anspruch 1, **dadurch gekennzeichnet, dass** in der Polymerisation unter anderem eine oder mehrere Substanzen als solche und/oder eine oder mehrere Lösungen von einer oder mehreren Substanzen und/oder eine oder mehrere Dispersionen von einer oder mehreren Substanzen, ausgewählt aus den mechanischen Stabilisierungsmitteln, eingesetzt werden.

14. Verfahren zur Herstellung von Latex nach einem der Ansprüche 11 bis 13, **dadurch gekennzeichnet, dass** die mechanischen Stabilisierungsmittel aus den C₆-C₂₀-Fettalkoholen, den C₆-C₂₀-Alkanen, den Diestern der gesättigten aliphatischen α,ω-Dicarbonsäuren und den Diestern der Phthalsäure ausgewählt sind.

15. Verfahren zur Herstellung von Latex nach Anspruch 14, **dadurch gekennzeichnet, dass** die mechanischen Stabilisierungsmittel Diester der gesättigten aliphatischen α,ω-Dicarbonsäuren sind.

16. Verfahren zur Herstellung von Zusammensetzungen eines Polymers/von Polymeren, welches die Verwendung eines, mit dem Verfahren nach einem der Ansprüche 1 bis 8 und 11 bis 15 hergestellten Latex oder eines, mit dem Verfahren nach Anspruch 9 oder 10 hergestellten Harzes umfasst.

17. Verfahren nach Anspruch 16, **dadurch gekennzeichnet, dass** es die Verwendung von Harzen eines Polymers/von Polymeren, die mit dem Verfahren nach einem der Ansprüche 9 oder 10 hergestellt werden, umfasst, welches Polymer/welche Polymeren sich, sei es im Pulverzustand, sei es im dispergierten Zustand, sei es auch in gelöstem Zustand befinden.

18. Verfahren nach Anspruch 17, **dadurch gekennzeichnet, dass** die Harze eines Polymers/von Polymeren Harze von Vinylchloridpolymer/-polymeren, welche wenigstens 80 Gew.-% -CH₂-CHCl-Einheiten umfassen, sind, und die Zusammensetzungen eines Polymers/von Polymeren Plastisol-Zusammensetzungen sind.

19. Verfahren zur Herstellung von Gegenständen, welches die Verwendung eines mit dem Verfahren nach einem der Ansprüche 1 bis 8 und 11 bis 15 hergestellten Latex oder eines mit dem Verfahren nach Anspruch 9 oder 10 hergestellten Harzes umfasst.
